# EUROPEAN PATENT APPLICATION

(11) **EP 4 418 130 A1**
(43) Date of publication of application: **21.08.2024**
(21) Application number: 21963632.1
(22) Date of filing: 12.11.2021
(51) Int. Cl.: G06F 13/40

(54) **SERIAL PORT SWITCHING APPARATUS AND METHOD, AND DEVICE, STORAGE MEDIUM, SYSTEM AND VEHICLE**

(71) Applicant: Huawei Technologies Co., Ltd., Shenzhen, Guangdong 518129 (CN)
(72) Inventor: MEI, Youliang, Shenzhen, Guangdong 518129 (CN)
(74) Representative: MERH-IP Matias Erny Reichl Hoffmann Patentanwälte PartG mbB
(86) International application number: PCT/CN2021/130358
(87) International publication number: WO 2023/082184

(57) **Abstract**

This application relates to the computer field, and in particular, to a serial port switching apparatus and method, a device, a storage medium, a system, and a vehicle. The serial port switching apparatus in embodiments of this application includes three multiplexers. These multiplexers may be controlled by using only one hotkey, so that an external interface is connected, in a switchable manner, to serial ports of a plurality of processors. In this way, operations such as debugging, maintenance, and fault recovery of a multiprocessor system may be implemented by using only one external interface. This can effectively save board port resources, and resolve a problem of maintenance and debugging if board ports are insufficient in a multiprocessor scenario. In addition, embodiments of this application may further have advantages such as simple operation, easy implementation, low costs, and good user experience.

## Description

### TECHNICAL FIELD

This application relates to a serial port switching apparatus and method, a device, a storage medium, a system, and a vehicle.

### BACKGROUND

As system complexity and chip integration increase, a quantity of processors on a single chip increases sharply. For example, some boards are provided with more than ten chips, and three different types of processors are integrated inside each chip. This requires that each chip be equipped with serial ports that match a quantity of processors for on-site debugging, fault identification, fault recovery, and the like. However, because panel space is limited, it is impossible to provide sufficient space for configuring so many serial ports. Therefore, a new serial port switching apparatus is urgently needed to resolve problems such as maintenance and debugging in the case of insufficient board ports.

### SUMMARY

To resolve the foregoing technical problem, embodiments of this application provide a serial port switching apparatus and method, a device, a storage medium, a system, and a vehicle.

A first aspect of this application provides a serial port switching apparatus, applied to a computing device. The computing device is provided with an external interface and includes G processors. The serial port switching apparatus includes one or more switching logic units. The switching logic unit is connected between the external interface and N processors in the computing device. The switching logic unit includes a first multiplexer, a second multiplexer, a third multiplexer, a hotkey detection module, and a control module.

In the first multiplexer, a control end is connected to the control module, a data output end is connected to the external interface, and a first data input end is connected to a data output end of the third multiplexer.

In the second multiplexer, a control end is connected to the control module, a data input end is connected to the external interface, and N data output ends are connected to input serial ports of the N processors in a one-to-one correspondence.

In the third multiplexer, a control end is connected to the control module, the data output end is connected to one data input end of the first multiplexer, and N data input ends are connected to output serial ports of the N processors in a one-to-one correspondence.

The hotkey detection module is configured to perform hotkey detection based on an input character of an external interface, to determine a hotkey type corresponding to the input character.

The control module is configured to perform switching when the hotkey type is a toggle hotkey. The switching includes: controlling the first multiplexer and the third multiplexer to enable an output serial port of a next processor in the N processors to be connected to the external interface, and controlling the second multiplexer to enable an input serial port of the next processor to be connected to the external interface.

G is an integer greater than or equal to two, and N is an integer less than or equal to G.

In this way, serial port switching between a plurality of processors may be implemented by using only one hotkey, and operations such as debugging, maintenance, and fault recovery of a multiprocessor system may be implemented by using only one external interface. This can effectively save board port resources, improve convenience of debugging and maintenance of the multiprocessor system, and further simplify board port design. In addition, the solution may further have advantages such as simple operation, easy implementation, low costs, and good user experience.

In a possible implementation of the first aspect, the control module is further configured to change a lock status when the hotkey type is a lock/unlock hotkey. The lock status is a locked state or an unlocked state. In the locked state, the control module does not perform the switching. In the unlocked state, the control module is capable of performing the switching when the hotkey type is the toggle hotkey. Therefore, locking/unlocking of a serial port in a multiprocessor system may be implemented by using only one lock/unlock hotkey. This can effectively save board port resources, and improve convenience of operations such as debugging, maintenance, and fault recovery of the multiprocessor system.

In a possible implementation of the first aspect, the switching logic unit further includes an idle detection module, configured to perform idle detection on the data output end of the third multiplexer. The control module is specifically configured to perform the switching when the hotkey type is the toggle hotkey and an idle detection result of the idle detection module is "idle"; or specifically configured to change the lock status when the hotkey type is the lock/unlock hotkey and an idle detection result of the idle detection module is "idle". In this way, the purpose of not performing switching in a non-idle mode can be achieved, to avoid garbled characters generated when the switching is performed in the case of a busy serial port or an abnormal output.

In a possible implementation of the first aspect, the control module is further configured to perform timeout control. The timeout control includes one of the following: before the switching is performed, stopping performing the switching if an idle detection result of the idle detection module is idle detection timeout; in a process of performing the switching, if an idle detection result of the idle detection module is idle detection timeout, controlling the first multiplexer, the second multiplexer, and the third multiplexer to roll back to a state prior to the switching; or before the changing the lock status is performed, stopping changing the lock status if an idle detection result of the idle detection module is idle detection timeout.

In this way, a timeout mechanism may be introduced to avoid a misjudgment or misoperation of a user caused by an excessively long execution time, so that serial port operation effectiveness and user experience can be improved.

In a possible implementation of the first aspect, the switching logic unit further includes: a prompt module, which is connected to a second data input end of the first multiplexer, and configured to output, under control of the control module, prompt information corresponding to the hotkey type to the first multiplexer. The control module is further configured to control the first multiplexer to select the prompt module, so that the prompt information is sent to an external device through the first multiplexer and the external interface.

In this way, information related to the serial port operation may be fed back to the user in real time in the serial port operation process, which helps a user clearly and visually learn of a serial port operation process and an operation result, to further avoid a misjudgment and a misoperation.

In a possible implementation of the first aspect, the control module is specifically configured to: before the prompt information is output, control the first multiplexer to select the prompt module, and control the third multiplexer to select the output serial port of the next processor; and after the prompt information is output, control the first multiplexer to select the third multiplexer, and control the second multiplexer to select the input serial port of the next processor, so that both the output serial port and the input serial port of the next processor in the N processors are connected to the external interface.

In this way, switching-related information can be fed back to the user in a timely manner in the process of performing the switching.

In a possible implementation of the first aspect, the serial port switching apparatus further includes a level shifter, connected between the switching logic unit and the external interface. In this way, level signal conversion between the external interface and a processor serial port may be implemented, to meet a level requirement of a standard interface.

A second aspect of this application provides a serial port switching method, applied to a computing device, where the computing device is provided with an external interface and includes G processors.

The serial port switching method is implemented by using a serial port switching apparatus. The serial port switching apparatus includes one or more switching logic units. The switching logic unit is connected between an external interface and serial ports of N processors in a computing device. The switching logic unit includes: a first multiplexer, a second multiplexer, and a third multiplexer. A data output end of the first multiplexer is connected to the external interface, a first data input end of the first multiplexer is connected to a data output end of the third multiplexer, a data input end of the second multiplexer is connected to the external interface, N data output ends of the second multiplexer are connected to input serial ports of the N processors in a one-to-one correspondence, the data output end of the third multiplexer is connected to one data input end of the first multiplexer, and N data input ends of the third multiplexer are connected to output serial ports of the N processors in a one-to-one correspondence.

The serial port switching method includes:
performing hotkey detection based on an input character of the external interface, to determine a hotkey type corresponding to the input character; and
performing switching when the hotkey type is a toggle hotkey, where the switching includes: controlling the first multiplexer and the third multiplexer to enable an output serial port of a next processor in the N processors to be connected to the external interface, and controlling the second multiplexer to enable an input serial port of the next processor to be connected to the external interface.

G is an integer greater than or equal to two, and N is an integer less than or equal to G.

In a possible implementation of the second aspect, the serial port switching method further includes: changing a lock status when the hotkey type is a lock/unlock hotkey. The lock status is a locked state or an unlocked state. In the locked state, a control module does not perform the switching, and in the unlocked state, the control module is capable of performing the switching when the hotkey type is the toggle hotkey.

In a possible implementation of the second aspect, the serial port switching method further includes: performing idle detection on the data output end of the third multiplexer.

The performing switching when the hotkey type is a toggle hotkey includes: performing the switching when the hotkey type is the toggle hotkey and a detection result of the idle detection is "idle"; or
the changing a lock status when the hotkey type is a lock/unlock hotkey includes: changing the lock status when the hotkey type is the lock/unlock hotkey and an idle detection result of an idle detection module is "idle".

In a possible implementation of the second aspect, the serial port switching method further includes: performing timeout control, where the timeout control includes one of the following:
before the switching is performed, stopping performing the switching if an idle detection result is idle detection timeout;
in a process of performing the switching, if an idle detection result is idle detection timeout, controlling the first multiplexer, the second multiplexer, and the third multiplexer to roll back to a state prior to the switching; or
before the changing the lock status is performed, stopping changing the lock status if an idle detection result is idle detection timeout.

In a possible implementation of the second aspect, the serial port switching apparatus further includes a prompt module. The prompt module is connected to a second data input end of the first multiplexer. The serial port switching method further includes: controlling the first multiplexer to select the prompt module, so that prompt information is sent to an external device through the first multiplexer and the external interface.

In a possible implementation of the second aspect, the controlling the first multiplexer and the third multiplexer to enable an output serial port of a next processor in the N processors to be connected to the external interface includes: before the prompt information is output, controlling the first multiplexer to select the prompt module, and controlling the third multiplexer to select the output serial port of the next processor; and after the prompt information is output, controlling the first multiplexer to select the third multiplexer, so that the output serial port of the next processor in the N processors is connected to the external interface. The controlling the second multiplexer to enable an input serial port of the next processor to be connected to the external interface includes: after the prompt information is output, controlling the second multiplexer to select the input serial port of the next processor, so that the input serial port of the next processor is connected to the external interface.

A third aspect of this application provides an electronic device, including a processor and an interface circuit. The processor accesses a memory by using the interface circuit. The memory stores program instructions. When the program instructions are executed by the processor, the processor is enabled to perform the foregoing serial port switching method.

A fourth aspect of this application provides an electronic device, including a processor and a memory. The memory stores program instructions. When the program instructions are executed by the processor, the processor is enabled to perform the foregoing serial port switching method.

In a possible implementation of the fourth aspect, the processor is a CPLD. A ROM is integrated inside the CPLD, the CPLD is relatively low in costs, and resources are appropriate and not wasted. Therefore, costs can be further reduced.

A fifth aspect of this application provides a computer-readable storage medium. The computer-readable storage medium stores program instructions. When the program instructions are executed by a computer, the computer is enabled to perform the foregoing serial port switching method.

A sixth aspect of this application provides a computer program product, including a computer program. When the computer program is run by a processor, the processor is enabled to perform the serial port switching method according to the second aspect.

A seventh aspect of this application provides a computing device, where the computing device includes a plurality of processors. The computing device further includes the foregoing serial port switching apparatus, either one of the foregoing electronic devices, or the foregoing computer-readable storage medium.

An eighth aspect of this application provides a chassis system, including the foregoing serial port switching apparatus, either one of the foregoing electronic devices, the foregoing computer-readable storage medium, or the foregoing computing device.

A ninth aspect of this application provides an in-vehicle system, including the foregoing serial port switching apparatus, either one of the foregoing electronic devices, the foregoing computer-readable storage medium, or the foregoing computing device.

A tenth aspect of this application provides a vehicle, including the foregoing serial port switching apparatus, either one of the foregoing electronic devices, the foregoing computer-readable storage medium, the foregoing computing device, or the foregoing in-vehicle system.

In embodiments of this application, a serial port switching apparatus includes a second multiplexer and a third multiplexer. The third multiplexer is connected between output serial ports of a plurality of processors and an external interface. The second multiplexer is connected between input serial ports of the plurality of processors and the external interface. In response to an input character corresponding to a toggle hotkey, the third multiplexer is controlled to select an output serial port of a processor, and the second multiplexer is controlled to select an input serial port of the processor, to implement a serial port switching function between the plurality of processors by using only one hotkey, so that logic complexity of serial port switching is effectively reduced, and user operations of serial port switching are simplified. Therefore, operations such as debugging, maintenance, and fault recovery of a multi-processing system may be implemented by using only one external interface. This can effectively save board port resources, and improve board debugging convenience. In addition, embodiments of this application further have advantages of easy implementation, low costs, and improved user experience.

These aspects and another aspect of this application will be clearer and easier to understand in descriptions of the following (a plurality of) embodiments.

### BRIEF DESCRIPTION OF DRAWINGS

The following further describes features of this application and a relationship between the features with reference to the accompanying drawings. The accompanying drawings are all examples, and some features are not shown in actual proportions. In addition, in some accompanying drawings, common features that are not mandatory for this application in the field of this application may be omitted. Alternatively, additional features that are not mandatory for this application are not shown. A combination of the features shown in the accompanying drawings is not intended to limit this application. In addition, in this specification, content referred to by same reference signs is also the same. The specific accompanying drawings are described as follows:
FIG. 1 is a schematic diagram of a structure and a connection of a serial port switching apparatus according to an embodiment of this application;
FIG. 2 is a schematic diagram of a structure of a serial port switching apparatus according to an embodiment of this application;
FIG. 3 is a schematic flowchart of a serial port switching method according to an embodiment of this application;
FIG. 4 is an example of a specific implementation flowchart of a serial port switching method according to an embodiment of this application;
FIG. 5 is a schematic diagram of a structure of an electronic device according to an embodiment of this application;
FIG. 6 is a schematic diagram of a structure of a computing device according to an embodiment of this application;
FIG. 7 is a schematic diagram of a structure of an intelligent driving controller;
FIG. 8 is a schematic diagram of a structure of an intelligent driving controller according to an embodiment of this application; and
FIG. 9 is a schematic diagram of a structure of a chassis system according to an embodiment of this application.

### DESCRIPTION OF EMBODIMENTS

Important terms and related terms in embodiments of this application are explained as follows:

A console (Console) port may also be referred to as a management port or a maintenance segment. It is a console access port of a device and is used by a user to perform initial configuration and subsequent management on the device through a terminal or an emulation terminal (such as a serial port service program). The console port is usually an RJ45 interface, a DB9 interface, or a DB25 interface, and complies with the serial data interface standard (RS232) protocol.

The following briefly analyzes possible implementations of serial port switching.

Currently, for a serial port switching solution, there are mainly the following two possible implementations:
(1) Serial port switching solution based on an internal controller: Log in to the controller over a network or a serial port, enter a switching command, and use the controller to control a toggle switch, to implement switching. Disadvantages of this implementation is that an operation is complex, and a user cannot visually learn of a switching result.
(2) Serial port switching solution based on an external serial port: An instruction is input to a complex programmable logic device (Complex Programmable Logic Device, CPLD) as a hotkey or a frame format. The CPLD obtains serial port data through parsing, and determines, through comparison, whether a toggle hotkey or a switching frame exists. Then, a corresponding serial port is switched to. Disadvantages of this implementation include: 1. When there are a large number of serial ports, hotkeys are insufficient. 2. There may be a conflict with hotkeys of some serial port tools. 3. The switching frame and the normal application scenario need to be switched repeatedly, and logic complexity of serial port switching is relatively high. 4. A switching result is not fed back. When there is a plurality of operating systems of a same type, a processor corresponding to a current serial port cannot be distinguished.

In addition, the foregoing two serial port switching solutions are hard switching solutions, which may cause garbled characters on serial ports.

In view of this, embodiments of this application provide a new serial port switching apparatus and method, a device, a storage medium, a system, and a vehicle, so that serial port switching between a plurality of processors may be implemented by using only one hotkey, and operations such as debugging, maintenance, and fault recovery of a multiprocessor system may be implemented by using only one external interface.

It should be noted that the external interface described in embodiments of this application is an interface used to connect to an external device, and the external interface may be of various applicable types. For example, the external interface may be, but is not limited to, a debugging interface or a maintenance interface. For example, the external interface may be the console port mentioned in this specification.

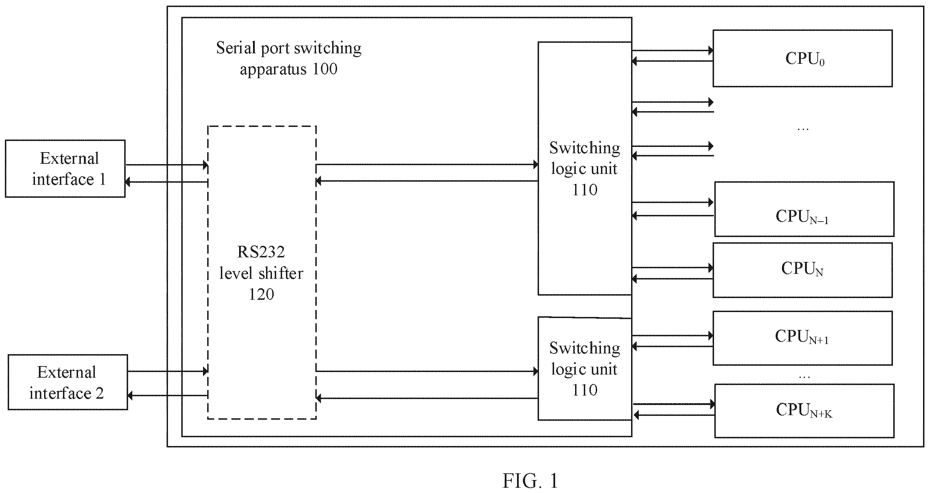

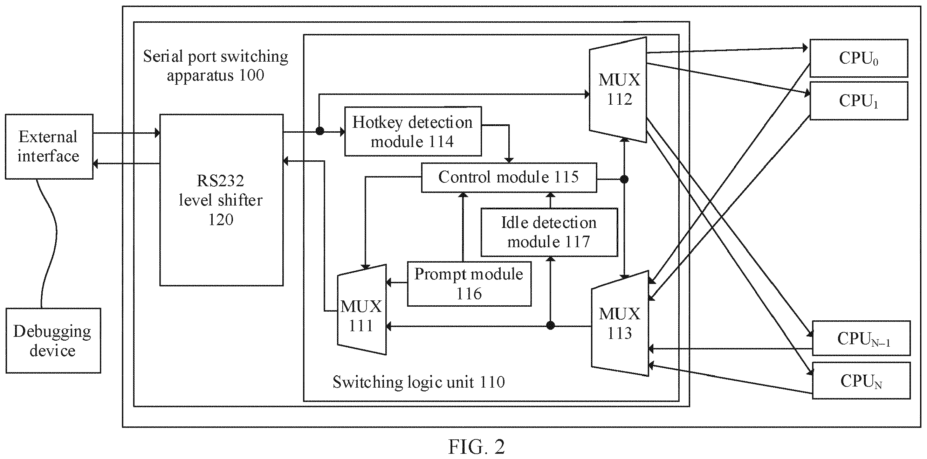

FIG. 1 and FIG. 2 are schematic diagrams of a structure and a connection of a serial port switching apparatus 100 according to an embodiment of this application. The serial port switching apparatus 100 provided in this embodiment of this application may be applied to a computing device. The computing device is provided with one or more external interfaces, and may include G processors. Each processor is provided with serial ports. The serial ports may include an input serial port and an output serial port. G is an integer greater than or equal to two, and G represents a total quantity of processors in the computing device.

As shown in FIG. 1, the serial port switching apparatus 100 may include one or more switching logic units 110. One switching logic unit 110 is responsible for serial port switching of a plurality of processors corresponding to a same external interface.

If the computing device is provided with one external interface, or only one external interface needs to be connected to a plurality of processors, only one switching logic unit 110 may be disposed in the serial port switching apparatus 100. The switching logic unit 110 is connected between the external interface and a plurality of processors corresponding to the external interface.

If the computing device is provided with two or more external interfaces, and the two or more external interfaces each correspond to a plurality of processors, two or more switching logic units 110 may be disposed in the serial port switching apparatus 100. Each switching logic unit 110 is connected between one external interface and a plurality of processors corresponding to the external interface.

It is assumed that an external interface is a debugging interface of N processors in a computing device, and a switching logic unit 110 corresponding to the external interface may be connected between the external interface and the N processors. The switching logic unit 110 is configured to implement serial port switching of the N processors, where N represents a total quantity of processors corresponding to the switching logic unit 110, N is an integer less than or equal to G, and N is an integer greater than or equal to two.

FIG. 1 is used as an example. The computing device may be provided with two external interfaces: an external interface 1 and an external interface 2. The computing device includes G (G = N + K) processors: a CPU₀ to a CPU_{N+K}. The external interface 1 corresponds to first N processors: the CPU₀ to a CPU_{N}, and the external interface 2 corresponds to last K processors: CPU_{N+1} to CPU_{N+K}, where N is an integer greater than or equal to two, and K is an integer greater than or equal to two. Correspondingly, the serial port switching apparatus 100 may include two switching logic units 110. One switching logic unit 110 is connected between the external interface 1 and the processors CPU₀ to CPU_{N}, and is responsible for serial port switching of the first N processors CPU₀ to CPUrr. The other switching logic unit 110 is connected between the external interface 2 and the processors CPU_{N+1} to CPU_{N+K}, and is responsible for serial port switching of the last K processors CPU_{N+1} to CPU_{N+K}.

As shown in FIG. 2, the switching logic unit 110 may include: a first multiplexer (Multiplexer, MUX) 111, a second multiplexer 112, a third multiplexer 113, a hotkey detection module 114, and a control module 115.

Serial port switching of the N processors CPU₀ to CPU_{N} is used as an example. A relationship between parts in the switching logic unit 110 is as follows:
The first multiplexer 111 is provided with one control end, two data input ends, and one data output end. The control end is connected to the control module 115, the data output end is connected to an external interface, and a first data input end of the two data input ends is connected to a data output end of the third multiplexer 1 13.
The second multiplexer 112 is provided with one control end, one data input end, and at least N data output ends. The control end is connected to the control module 115, the N data output ends are connected to input serial ports of the N processors in a one-to-one correspondence, and the data input end is connected to the external interface.
The third multiplexer 113 is provided with one control end, one data output end, and at least N data input ends. The control end is connected to the control module 115, the data output end is connected to the first data input end of the first multiplexer 111, and the N data input ends are connected to output serial ports of the N processors in a one-to-one correspondence.

An input end of the hotkey detection module 114 is connected to the external interface, and an output end is connected to the control module 115.

The control module 115 is separately connected to the hotkey detection module 114, the control end of the first multiplexer 111, the control end of the second multiplexer 112, and the control end of the third multiplexer 113.

In some embodiments, the hotkey detection module 114 may be configured to perform hotkey detection based on an input character of the external interface, to determine a hotkey type corresponding to the input character. After determining the hotkey type corresponding to the input character, the hotkey detection module 114 may provide information about the hotkey type for the control module 115, so that the control module 115 performs a corresponding serial port operation based on the hotkey type.

The hotkey type may include, but be not limited to, a toggle hotkey and a lock/unlock hotkey. Correspondingly, the serial port operation may include, but be not limited to, switching and locking/unlocking. In specific application, another hotkey type may be defined based on different application scenarios and actual test requirements. A specific definition of the hotkey type is not limited in this embodiment of this application.

In some embodiments, the control module 115 may be configured to perform switching when the hotkey type is a toggle hotkey. The switching may include: controlling the first multiplexer 111 and the third multiplexer 113 to enable an output serial port of a next processor in the N processors to be connected to the external interface, and controlling the second multiplexer 112 to enable an input serial port of the next processor to be connected to the external interface, to implement serial port switching from a current processor to the next processor in the N processors. Therefore, in this embodiment of this application, sequential rolling switching of serial ports between a plurality of processors (for example, the N processors CPU₀ to CPU_{N}) may be implemented by using only one toggle hotkey.

In some embodiments, the control module 115 may be further configured to change a lock status when the hotkey type is a lock/unlock hotkey. The lock status may be a locked state or an unlocked state. In the locked state, the control module 115 does not perform the switching, and in the unlocked state, the control module 115 is capable of performing the switching when the hotkey type is the toggle hotkey. In this way, locking/unlocking of an output serial port of a processor may be implemented by using only one lock/unlock hotkey.

Specifically, the changing the lock status may include: When the hotkey type is the lock/unlock hotkey, the control module 115 changes a current locked state to the unlocked state, or changes a current unlocked state to the locked state. To be specific, if the control module 115 is currently in the locked state, the control module 115 updates the lock status to the unlocked state in response to an input character corresponding to the lock/unlock hotkey; or if the control module 115 is currently in the unlocked state, the control module 115 updates the lock status to the locked state in response to an input character corresponding to the lock/unlock hotkey.

In some embodiments, the switching logic unit 110 may further include a prompt module 116. As shown in FIG. 2, one end of the prompt module 116 is connected to a second data input end of the first multiplexer 111, and the other end of the prompt module 116 is connected to the control module 115. In some embodiments, the prompt module 116 may be configured to output, under control of the control module 115, prompt information corresponding to the hotkey type to the first multiplexer 111. The control module 115 may be further configured to control the first multiplexer 111 to select the prompt module 116, so that the prompt information is sent to an external device (for example, a debugging device) through the first multiplexer 111 and the external interface, so that the external device displays the prompt information to a user, which helps the user clearly and visually learn of information such as a serial port operation process and an operation result.

The prompt information may be pre-configured information corresponding to the hotkey type. In specific application, corresponding prompt information may be separately configured for different hotkey types.

For example, switching prompt information may be pre-configured for the toggle hotkey. When the hotkey type is the toggle hotkey, the control module 115 may control the prompt module 116 to output the switching prompt information, where the switching prompt information may indicate a serial port of a processor to which a current serial port in switched in a current operation, and the switching prompt information may include content such as an identifier of the processor.

For another example, lock prompt information may be pre-configured for the lock/unlock hotkey. When the hotkey type is the lock/unlock hotkey, the control module 115 may control the prompt module 116 to output the lock prompt information, where the lock prompt information may indicate a serial port of a processor to be locked or unlocked in a current operation, and the lock prompt information may include content such as an identifier of the processor and a locking/unlocking action instruction.

It should be noted that a format, a form, content, and the like of the prompt information is not limited in this embodiment of this application.

In some embodiments, the control module 115 may be specifically configured to: before the prompt information is output, control the first multiplexer 111 to select the prompt module 116, and control the third multiplexer 113 to select the output serial port of the next processor; and after the prompt information is output, control the first multiplexer 111 to select the third multiplexer 113, and control the second multiplexer 112 to select the input serial port of the next processor, so that both the output serial port and the input serial port of the next processor in the N processors are connected to the external interface. In this way, switching may be performed between serial ports of a plurality of processors by using only one toggle hotkey, and prompt information is output in a switching process, which helps a user learn of related information about serial port switching in a timely and accurate manner, so that a misoperation or a misjudgment of the user can be effectively avoided.

In some embodiments, the switching logic unit 110 may further include an idle detection module 117. As shown in FIG. 2, an input end of the idle detection module 117 is connected to the data output end of the third multiplexer 113, and an output end of the idle detection module 117 is connected to the control module 115.

In some embodiments, the idle detection module 117 may be configured to perform idle detection on the data output end of the third multiplexer 113. In specific application, the idle detection module 117 may implement idle detection in various applicable manners. For example, the idle detection module 117 may perform idle detection on the data output end of the third multiplexer 113. If two consecutive characters of data output by the third multiplexer 113 are both at a high level, it may be determined that the data output end of the third multiplexer 113 is idle, that is, an output serial port of a processor currently selected by the third multiplexer 113 is idle, and an idle detection result indicating "idle" is output to the control module 115. If there are no two consecutive characters that are at a high level within predetermined duration, it is considered that the idle detection times out, it may be determined that the data output end of the third multiplexer 113 is busy or there is an abnormal output, that is, an output serial port of a processor currently selected by the third multiplexer 113 is busy or abnormal, and an idle detection result indicating "not idle" is output to the control module 115. In this way, the control module 115 may perform an action corresponding to a hotkey based on an idle state of the data output end of the third multiplexer 113, so that garbled characters are prevented.

In some embodiments, the control module 115 may be specifically configured to perform the foregoing switching when the hotkey type is the toggle hotkey and the idle detection result of the idle detection module 117 is "idle". In this way, a current serial port may be switched to a serial port of a target processor after it is determined that the idle detection result is "idle", to avoid garbled characters.

In some embodiments, the control module 115 may be specifically configured to change the lock status when the hotkey type is the lock/unlock hotkey and the idle detection result of the idle detection module 117 is "idle". In this way, locking/unlocking may be performed after it is determined that the idle detection result is "idle", to avoid garbled characters.

In some embodiments, the control module 115 may be further configured to perform timeout control. The timeout control may include one of the following: (1) before the switching is performed, stopping performing the switching if an idle detection result of the idle detection module 117 is idle detection timeout; (2) in a process of performing the switching, if an idle detection result of the idle detection module 117 is idle detection timeout, controlling the first multiplexer 111, the second multiplexer 112, and the third multiplexer 113 to roll back to a state prior to the switching; or (3) before the changing the lock status is performed, stopping changing the lock status if a detection result of the idle detection module 117 is idle detection timeout.

Specifically, in the process of performing the switching, the control module 115 may be further configured to: when the idle detection result of the idle detection module 117 is idle detection timeout, control the third multiplexer 113 to select an output serial port of the current processor, and control the second multiplexer 112 to select an input serial port of the current processor. In this way, not only the target processor can be rolled back to the current processor when the target processor is busy or the output is abnormal, but also timeout control of serial port switching may be implemented, to prevent the process of performing the switching from taking a long time.

Specifically, before the switching is performed, the control module 115 may be further configured to: when the idle detection result of the idle detection module 117 is idle detection timeout, determine that the switching fails, and skip performing a switching action. In this way, timeout control of serial port switching may be implemented, to avoid a misoperation caused by a time-consuming switching process.

Specifically, before the lock status is changed, the control module 115 may be further configured to: when the idle detection result of the idle detection module 117 is idle detection timeout, determine that the locking/unlocking fails, and skip performing an action of changing the lock status. In this way, timeout control of serial port locking/unlocking may be implemented, to avoid a misoperation caused by a time-consuming locking/unlocking process.

If a serial port operation (for example, switching or locking/unlocking) is performed for an excessively long time, an operator may make a misjudgment, and consequently an incorrect operation result is caused (for example, switching to an incorrect processor or performing locking/unlocking on an incorrect processor). For example, if the switching is performed for an excessively long time, the operator may consider that the switching fails and continue to input the toggle hotkey, which causes the switching to an incorrect processor serial port. In view of this, the foregoing timeout control mechanism is introduced in this embodiment of this application, to effectively avoid such a case, improve serial port operation effectiveness, simplify user operations, and improve user experience.

In some embodiments, the serial port switching apparatus 100 may further include a level shifter. The level shifter is connected between the switching logic unit 110 and the external interface, and is configured to implement level signal conversion between the external interface and a processor serial port. For example, as shown in FIG. 1 and FIG. 2, the level shifter may be, but is not limited to, an RS232 level shifter 120, and may be configured to implement conversion between a level signal such as an LVCMOS level signal or an LVTTL level signal and an RS232 level signal, to meet a level requirement of a universal asynchronous receiver/transmitter (Universal Asynchronous Receiver/Transmitter, UART) interface of a standard console.

The serial port switching apparatus 100 in this embodiment of this application may be applied to various computing devices. In some embodiments, the serial port switching apparatus 100 may be deployed on a single-board computer with a plurality of processors, to implement a serial port switching function between the plurality of processors in the single-board computer. This not only saves external interface resources required for board maintenance and debugging, but also has advantages such as easy implementation, simple operation, low costs, and good user experience.

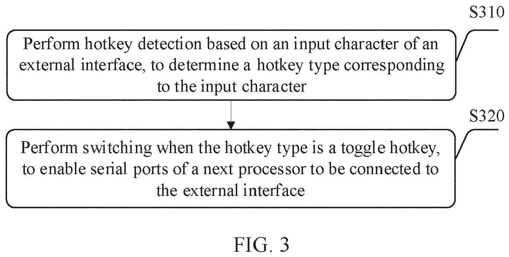

FIG. 3 is a schematic flowchart of a serial port switching method according to an embodiment of this application. The serial port switching method is implemented by using the foregoing serial port switching apparatus 100. Still, serial port switching of the N processors CPU₀ to CPU_{N} is used as an example. As shown in FIG. 3, the serial port switching method provided in this embodiment of this application may include the following steps:

Step S310: Perform hotkey detection based on an input character of an external interface, to determine a hotkey type corresponding to the input character.

Step S320: Perform switching when the hotkey type is a toggle hotkey. The switching includes: controlling a first multiplexer 111 and a third multiplexer 113 to enable an output serial port of a next processor in the N processors to be connected to the external interface, and controlling a second multiplexer 112 to enable an input serial port of the next processor to be connected to the external interface.

In some embodiments, step S320 may further include: changing a lock status when the hotkey type is a lock/unlock hotkey. The lock status is a locked state or an unlocked state. In the locked state, a control module 115 does not perform the switching, and in the unlocked state, the control module 115 is capable of performing the switching when the hotkey type is the toggle hotkey.

In some embodiments, step S320 may further include: controlling the first multiplexer to select a prompt module, so that prompt information is sent to an external device through the first multiplexer and the external interface.

In some embodiments, the switching in step S320 may specifically include: before the prompt information is output, controlling the first multiplexer to select the prompt module, and controlling the third multiplexer to select the output serial port of the next processor; and after the prompt information is output, controlling the first multiplexer to select the third multiplexer, and controlling the second multiplexer to select the input serial port of the next processor. In this way, both the input serial port and the output serial port of the next processor in the N processors may be connected to the external interface.

In some embodiments, step S320 may further include: performing idle detection on a data output end of the third multiplexer.

In an implementation, in step S320, the switching is performed when the hotkey type is the toggle hotkey and a detection result of the idle detection is "idle".

In an implementation, in step S320, the lock status is changed when the hotkey type is the lock/unlock hotkey and an idle detection result of an idle detection module is "idle".

In some embodiments, the foregoing serial port switching method may further include: performing timeout control. The timeout control may include one of the following: (1) before the switching is performed, stopping performing the switching if an idle detection result is idle detection timeout; (2) in a process of performing the switching, if an idle detection result is idle detection timeout, controlling the first multiplexer 111, the second multiplexer 112, and the third multiplexer 113 to roll back to a state prior to the switching; or (3) before the changing the lock status is performed, stopping changing the lock status if an idle detection result is idle detection timeout.

The following describes an example of a specific implementation of the serial port switching method in this embodiment of this application.

Before the serial port switching, debugging serial ports of CPUs on a board are separately connected to a switching logic unit of a serial port switching apparatus, and a console port on the board is connected to the switching logic unit of the serial port switching apparatus by using a level shifter.

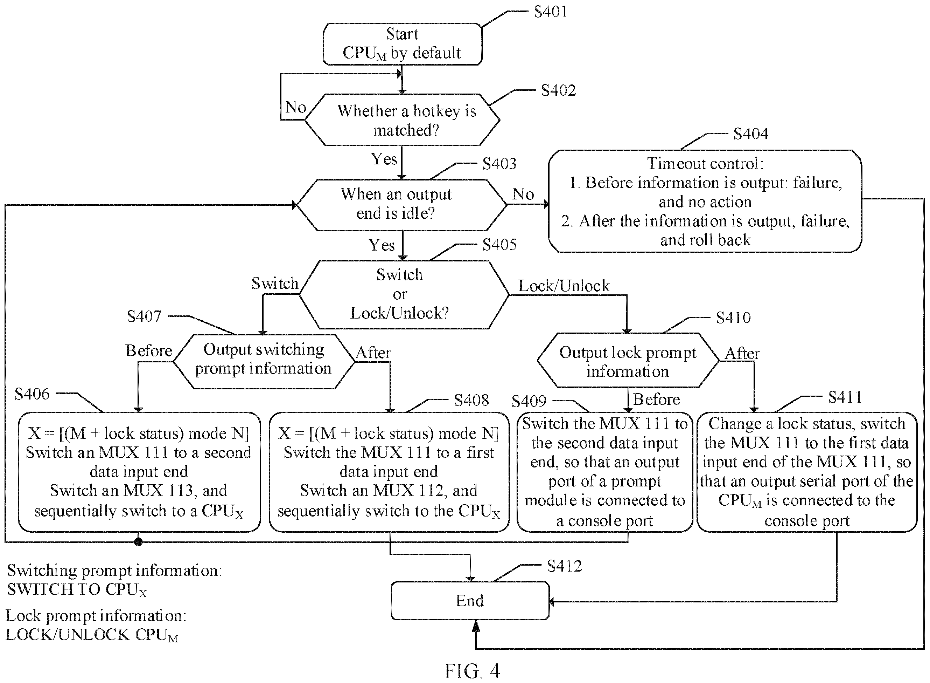

As shown in FIG. 4, an example of an implementation procedure of serial port switching of a multiprocessor single-board computer may include the following steps.

Step S401: After power-on, a CPU_{M} (0≤M<N) is connected to a panel console by default, a COM port of a debugging device is connected to the console port of the single-board computer, and a user enters a character to the console port by using a serial port service program loaded on the debugging device, and the procedure starts.

The serial port service program may be a visual serial port service program installed on the debugging device, and may also be called serial interaction software, such as HyperTerminal of Windows.

Step S402: Monitor the input character of the console port, perform byte-by-byte detection on the input character to determine whether a hotkey is matched, enable a corresponding hotkey function (that is, serial port switching or serial port locking/unlocking) when a hotkey is matched, and proceed to step S430; or return to step S401 when no hotkey is matched.

For example, an ASCII code 0x1c corresponds to a hotkey "Ctrl+]", where the hotkey "Ctrl+]" is a pre-agreed hotkey for sequentially switching serial ports; and an ASCII code 0x1d corresponds to a hotkey "Ctrl+\", where the hotkey "Ctrl+\" is a pre-agreed lock/unlock hotkey. If the input character of the console port is 0x1c, a toggle hotkey is matched. If the input character of the console port is 0x1d, a lock/unlock hotkey is matched. If the input character of the console port is neither 0x1c nor 0x1d, no hotkey is matched.

Step S403: Perform idle detection on a data output end of a third multiplexer 113, and when the data output end is idle, proceed to step S405; or when the data output end is not idle, proceed to step S404.

In this step, the idle detection may be continuously performed when predetermined duration is not exceeded.

Step S404: Perform timeout control, and skip to step S412.

Specifically, the timeout control may include one of the following:
(1) Before the switching (that is, before switching prompt information is output), a currently selected CPU is the CPU_{M}. If the idle detection times out, it is determined that the switching fails, and a switching action is not performed.
(2) During the switching (that is, after the switching prompt information is output), a currently selected CPU is a CPUx. If the idle detection times out, it is determined that the switching fails, and the CPUx is rolled back to the CPU_{M}.
(3) Before the locking/unlocking (that is, before lock prompt information is output), a currently selected CPU is the CPU_{M}. After the idle detection times out, it is determined that the locking/unlocking fails, and a lock status changing action is not performed.
(4) During the locking/unlocking (that is, after the lock prompt information is output), a currently selected CPU is the CPU_{M}. After the idle detection times out, it is determined that the locking/unlocking fails, and a lock status changing action is not performed.

The idle detection timeout means that an execution time of the idle detection exceeds predetermined duration. In other words, in the predetermined duration, the data output end of the third multiplexer 113 is continuously in a busy state or an abnormal output state. The state of the data output end of the third multiplexer 113 is a state of an output serial port of the CPU currently selected by the third multiplexer 113. Generally, in a serial port switching or locking/unlocking process, once it is determined that the hotkey is matched, idle detection is continuously performed until the serial port switching or the locking/unlocking ends. The timeout control and the idle detection may be performed simultaneously until the serial port switching or the locking/unlocking ends.

In specific application, the predetermined duration of the idle detection may be configured by setting a detection window, and a specific value of the predetermined duration may be freely set depending on a requirement of an application scenario. A configuration manner and a specific value of the predetermined duration are not limited in this embodiment of this application.

Step S405: Determine whether a hotkey type is a toggle hotkey or a lock/unlock hotkey. If the hotkey type is the toggle hotkey, a serial port switching procedure in step S406 to step S408 is followed. If a function of the hotkey is locking/unlocking, a locking/unlocking procedure in step S409 to step S411 is followed.

Step S406: Before the switching prompt information is output, a control module 115 controls a first multiplexer MUX 111 to switch to a second data input end, so that an output port of a prompt module 116 is connected to the console port, and the prompt module 116 outputs the prompt information. In addition, the control module 115 controls the third multiplexer MUX 113 to switch to an X^{th} data input end, so that an output serial port of a CPUx is connected to a first data input end of the first multiplexer MUX 111, and step S407 is performed. At the same time, step S403 is continuously performed, to detect whether the data output end of the third multiplexer MUX 113 is idle, that is, to detect whether the output serial port of the CPUx is idle.

X = [(M + 1) mode N], where "mode N" represents a modulo operation. Overflow switching to an empty serial port may be avoided by using the modulo operation. The CPUx is a CPU next to the CPU_{M}, where M and X are integers greater than or equal to one, X is an integer greater than or equal to two, N is an integer greater than or equal to two, N represents a quantity of processors connected to a switching logic unit 110 that executes this procedure, M represents an identifier of a current processor (for example, a serial number), and X is an identifier (for example, a serial number) of a next processor.

In specific application, identifiers of the processors connected to the switching logic unit 110 may be pre-configured. In some implementations, a processor identifier sequence that corresponds to the switching logic unit 110 one by one may be pre-configured in the control module 115. The processor identifier sequence may include identifiers of all the processors connected to the switching logic unit 110, and the identifiers are arranged in a pre-determined order. When performing the switching, the control module 115 may determine the identifier of the next processor (that is, a target processor to be switched to) based on the identifier of the current processor and the processor identifier sequence, so as to perform switching for the next processor.

Step S407: The prompt module 116 outputs switching prompt information "SWITCH TO CPUx". The switching prompt information is output to the debugging device through the MUX 111 and the console port in sequence, and the debugging device displays the switching prompt information, so that a user visually and clearly learns of the target processor to be switched to.

Step S408: After the switching prompt information is output, if the output serial port of the CPUx is idle, the control module 115 controls the MUX 111 to switch to the first data input end of the MUX 111, so that the output serial port of the CPUx is connected to the console port; and the control module 115 controls the MUX 112 to switch to an X^{th} data input end of the MUX 112, so that the console port is connected to an input serial port of the CPUx, and skip to step S412, to end a serial port switching procedure from the CPU_{M} to the CPUx.

Step S409: Before the lock prompt information is output, the control module 115 controls the MUX 111 to switch to the second data input end, so that the output port of the prompt module 116 is connected to the console port, and step S410 is performed. At the same time, step S403 is continuously performed to detect whether the data output end of the third multiplexer MUX 113 is idle, that is, determine whether the output serial port of the CPUx is idle.

Step S410: The prompt module 116 outputs the lock prompt information "UNLOCK/LOCK CPU_{M}". The lock prompt information is output to the debugging device through the MUX 111 and the console port in sequence, and the debugging device displays the lock prompt information.

Specifically, before the lock prompt information is output, if a value of a lock status is " 1 ", it indicates that currently the lock status is an unlocked state, and output content of the lock prompt information may be "LOCK CPU_{M}", to prompt the user that the lock status is to be changed to a locked state, that is, the output serial port of the CPU_{M} is to be locked; or if a value of a lock status is 0, it indicates that currently the lock status is a locked state, and output content of the lock prompt information may be "UNLOCK CPU_{M}", to prompt the user that the lock status is to be changed to an unlocked state, that is, the output serial port of the CPU_{M} is to be unlocked.

Step S411: After the switching prompt information is output, if the output serial port of the CPU_{M} is idle, the control module 115 changes the lock status, and controls the MUX 111 to switch to the first data input end of the MUX 111, so that the output serial port of the CPU_{M} is connected to the console port, and proceed to step S412, to end a locking/unlocking procedure of the output serial port of the CPU_{M}.

Specifically, if the value of the lock status is "0" before the change, it indicates that the control module 115 is in the locked state. In this step, the value of the lock status is changed to "1", so that the control module 115 is changed to be in the unlocked state. If the value of the lock status is "1" before the change, it indicates that the control module 115 is in the unlocked state. In this step, the value of the lock status is changed to "0", so that the control module 115 is changed to be in the locked state. In this way, the lock/unlock hotkey enables the control module 115 to switch between the two lock states, so that a locking operation and an unlocking operation for the output serial port of the current processor CPU_{M} is implemented.

Step S412: End the procedure.

It can be learned from the foregoing example of the implementation procedure that, the serial port switching method in this embodiment of this application may achieve the following effects: First, sequential and cyclic switching may be performed between a plurality of CPUs (for example, a CPU₀ to a CPU_{N}) by using only one hotkey, and serial port switching and serial port locking/unlocking from the CPU₀ to the CPUrr may be implemented by using only two hotkeys. This can effectively avoid a serial port program hotkey conflict on a debugging device, reduce logic complexity of a serial port operation, and save external interface resources of a board. Second, prompt information can be output during the serial port operation, which helps a user easily and visually learn of a serial port operation process and result. Third, no switching is performed in a non-idle mode, which avoids garbled characters caused by serial port switching. Fourth, timeout control is introduced to avoid a misoperation of a user caused by an excessively long execution time of the serial port operation, so that serial port operation effectiveness and user experience can be improved. Fifth, when a target processor (for example, a CPUx) is abnormal, the target processor may be rolled back to the processor prior to the switching (for example, a CPU_{M}), serial port operation effectiveness and user experience can be further improved.

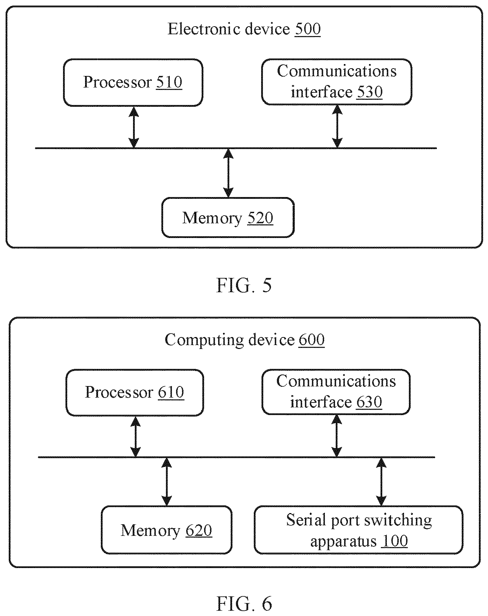

FIG. 5 is a schematic diagram of a structure of an electronic device 500 according to an embodiment of this application. The electronic device 500 includes a processor 510 and a memory 520.

The processor 510 may be connected to the memory 520. The memory 520 may be configured to store program code and data. Therefore, the memory 520 may be a storage unit inside the processor 510, or may be an external storage unit independent of the processor 510, or may be a component including a storage unit inside the processor 510 and an external storage unit independent of the processor 510.

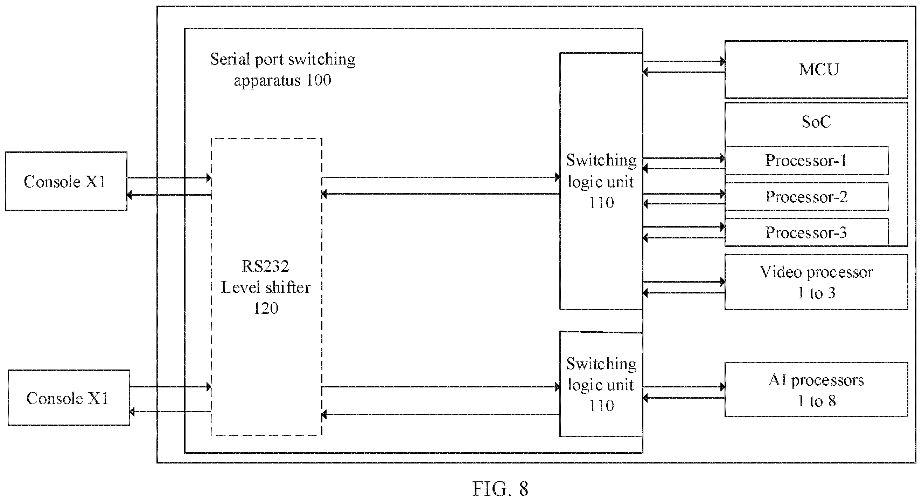

Optionally, the electronic device 500 may further include a communications interface 530. It should be understood that the communications interface 530 in the electronic device 500 shown in FIG. 8 may be used for communication with another device.

Optionally, the electronic device 500 may further include a bus. The memory 520 and the communications interface 530 may be connected to the processor 510 by using the bus. For ease of representation, only one line is used in FIG. 5 for representing the bus, but it does not mean that there is only one bus or only one type of bus.

It should be understood that in this embodiment of this application, the processor 510 may be a central processing unit (central processing unit, CPU). The processor may alternatively be another general-purpose processor, a digital signal processor (digital signal processor, DSP), an application-specific integrated circuit (application-specific integrated circuit, ASIC), a field programmable gate array (field programmable gate array, FPGA), a CPLD or another programmable logic device, a discrete gate or transistor logic device, a discrete hardware component, or the like. The general-purpose processor may be a microprocessor, or the processor may be any conventional processor or the like. Alternatively, the processor 510 uses one or more integrated circuits, and is configured to execute a related program, to implement the technical solutions provided in embodiments of this application.

The memory 520 may include a read-only memory and a random access memory, and provides instructions and data for the processor 510. A part of the processor 510 may further include a nonvolatile random access memory. For example, the processor 510 may further store information about a device type.

When the electronic device 500 runs, the processor 510 executes computer-executable instructions in the memory 520 to perform the operation steps of the foregoing atmosphere light control method.

It should be understood that the electronic device 500 according to this embodiment of this application may correspond to a corresponding execution body of the method according to embodiments of this application, and the foregoing and other operations and/or functions of modules in the electronic device 500 are separately intended to implement corresponding procedures of the methods in embodiments. For simplicity, details are not described herein again.

This application further provides another electronic device, including a processor and an interface circuit. The processor accesses a memory by using the interface circuit. The memory stores program instructions. When the program instructions are executed by the processor, the processor is enabled to perform the foregoing serial port switching method.

In some embodiments, a programmable read-only memory (read-only memory, ROM) is integrated inside the CPLD, the CPLD has costs lower than those of another programmable device (for example, an FPGA), and resources are appropriate and not wasted. Therefore, in the electronic device provided in this embodiment of this application, the processor may be the CPLD.

An embodiment of this application further provides a computer-readable storage medium. The computer-readable storage medium stores a computer program. When the program is run by a processor, the processor is enabled to perform the foregoing serial port switching method. A computer-readable medium may be a computer-readable signal medium or a computer-readable storage medium. The computer-readable storage medium may be, but is not limited to, an electric, magnetic, optical, electromagnetic, infrared, or semiconductor system, apparatus, or device, or any combination thereof. More specific examples (non-exhaustive list) of computer-readable storage media include: an electrical connection having one or more wires, a portable computer disk, a hard disk, a random access memory, a read-only memory, an erasable programmable read-only memory, an optical fiber, a portable compact disk read-only memory, an optical storage device, a magnetic storage device, or any suitable combination thereof.

An embodiment of this application further provides a computer program product, including a computer program. When the computer program is run by a processor, the processor is enabled to perform the foregoing serial port switching method. There may be one or more program design languages for the computer program product. The program design language may include, but be not limited to, an object-oriented program design language such as Java or C++, and a conventional procedural program design language such as a "C" language.

An embodiment of this application further provides a computing device. The computing device includes a plurality of processors. The computing device further includes the serial port switching apparatus 100, the electronic device, the computer-readable storage medium, or the computer program product described above.

FIG. 6 is a schematic diagram of a structure of a computing device 600 according to an embodiment of this application. The computing device 600 includes a plurality of processors 610 and a serial port switching apparatus 100. The computing device 600 is provided with an external interface, and the serial port switching apparatus 100 is connected between the plurality of processors 610 and the external interface.

Optionally, the computing device 600 may further include a memory 620 and a communications interface 630. It should be understood that the computing device 600 may further include another component.

In actual application, the computing device 600 may be implemented as a single-board computer or a functional unit or module in a chip, or may be implemented as an independent chip or a single-board computer. For example, the computing device 600 may be a functional unit/module in a complex-board multiprocessor system, an in-vehicle infotainment, a cockpit domain controller (cockpit domain controller, CDC), a mobile data center/multi-domain controller (Mobile Data Center/Multi-Domain Controller, MDC), or a software and hardware integrated platform used to support intelligent driving, that is, a vehicle computing platform (vehicle computing platform, VPC). It should be noted that a form and a deployment manner of the computing device 600 are not limited in this embodiment of this application.

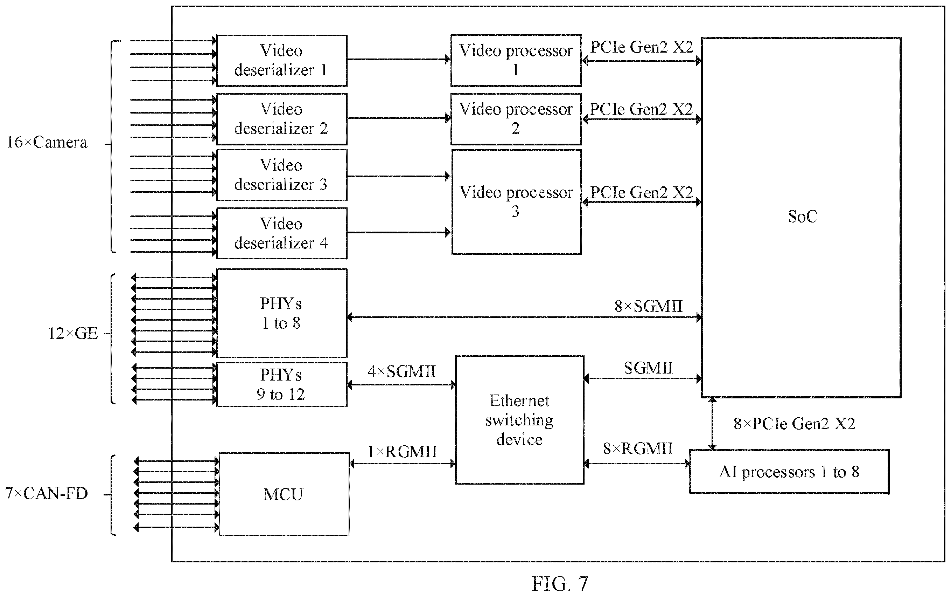

FIG. 7 shows an example of a structure of an MDC. As shown in FIG. 7, the MDC includes one system on chip (System on Chip, SoC), three video processors, eight artificial intelligence (AI) processors, one microcontroller (Microcontroller Unit, MCU), and various sensor interfaces. The sensor interfaces include 16 camera (Camera) interfaces, 12 GE interfaces, and seven controller area network with flexible data-rate (Controller Area Network with Flexible Data-Rate, CAN-FD) interfaces.

As shown in FIG. 7, eight serial gigabit media independent interfaces (Serial Gigabit Media Independent Interface, SGMII) of the SoC are connected to eight GE interfaces by using eight port physical layer (Physical Level, PHY) elements. One SGMII of the SoC is connected to four GE interfaces by using an Ethernet switching device and four SGMIIs and four port physical layer (Physical Level, PHY) elements of the Ethernet switching device. Three PCIe Gen2 X2 interfaces of the SoC are connected to the three video processors. A video processor 1 is connected to four camera interfaces by using a video deserializer 1. A video processor 2 is connected to four camera interfaces by using a video deserializer 2. A video processor 3 is connected to eight camera interfaces by using a video deserializer 3 and a video deserializer 4. The SoC is connected to the eight AI processors by using eight high-speed serial computer expansion bus standard (Peripheral Component Interconnect Express, PCIe) Gen2 X2 interfaces. Eight Reduced Gigabit Media Independent Interface (Reduced Gigabit Media Independent Interface, RGMII) interfaces of the eight AI processors are connected to the MCU by using the Ethernet switching device and one RGMII of the Ethernet switching device. The MCU is connected to the seven CAN-FD interfaces. Corresponding serial ports are required for installation, debugging, and fault recovery of the processors and microcontroller in the MDC. However, the MDC is provided with only two external interfaces, and cannot provide more serial ports.

FIG. 8 shows an example of a structure of an MDC including a serial port switching apparatus 100. As shown in FIG. 8, the serial port switching apparatus 100 includes two switching logic units 110 and one RS232 level shifter 120. One switching logic unit 110 is connected to one external interface Console X1 of the MDC by using the RS232 level shifter 120, and the switching logic unit 110 is responsible for serial port switching between a microcontroller (Microcontroller Unit, MCU), a system on chip (System on Chip, SoC) (including three processors), and three video processors. The other switching logic unit 110 is connected to the other external interface Console X1 of the MDC by using the RS232 level shifter 120, and the switching logic unit 110 is responsible for serial port switching between eight AI processors. In this way, by using the serial port switching apparatus 100, serial port switching and serial port locking/unlocking can be performed between processors in the MDC by defining only two hotkeys. Therefore, operations such as installation, debugging, and fault recovery of all processors in the MDC may be implemented through serial port switching by using only two external interfaces.

An embodiment of this application further provides an in-vehicle system. The in-vehicle system may include the serial port switching apparatus 100, either one of the foregoing electronic devices, the foregoing computer-readable storage medium, or the foregoing computing device 600.

In some embodiments, the in-vehicle system may include: an in-vehicle remote information processor (telematics box, T-Box), a central gateway, a body control module (Body Control Module, BCM), an integrated cockpit controller (Integrated Cockpit Controller, ICC), an advanced driving assistance system (Advanced Driving Assistance System, ADAS), a power distribution control unit (Power Distribution Control Unit, PDCU), and an on-board diagnostics system (On-Board Diagnostic).

The central gateway may be connected to the T-Box by using a CAN-FD or the Ethernet (Ethernet, ETH). The ICC, ADAS, PDCU, and on-board diagnostics system may be separately connected to the central gateway by using a CAN-FD or the ETH. The BCM may be connected to the central gateway by using a CAN-FD.

In this embodiment of this application, the ADAS includes the serial port switching apparatus 100. The serial port switching apparatus 100 may implement operations such as installation, debugging, maintenance, and fault recovery of a plurality of processors in the ADAS by using a few external interfaces. In some embodiments, the ADAS may be implemented as the MDC shown in FIG. 8.

The T-Box may be used to receive global positioning system (global positioning system, GPS) positioning information, and/or provide in-vehicle wireless fidelity (Wi-Fi) network access, and/or access a mobile data network by using long term evolution (Long Term Evolution, LTE), and is a general interface for connecting the vehicle to the outside.

The central gateway may be used to provide switching between a CAN and an in-vehicle Ethernet, and is a connection center of an n-vehicle network.

The BCM may be used to control or report a status of turn lights, headlights, brake lights, wipers, vehicle doors, and seat belt slots.

The ICC may be used to receive a user instruction, and display information on a display interface.

The ADAS may be used to receive sensing data of various sensors, obtain a vehicle control action instruction through complex calculation, and deliver the instruction to the PDCU to complete an automatic driving action.

The PDCU may be responsible for vehicle control actions such as steering, braking, acceleration, and deceleration, and reporting a status.

An embodiment of this application further provides a vehicle. The vehicle may include the serial port switching apparatus 100, either one of the foregoing electronic devices, the computing device 600, the foregoing computer-readable storage medium, the foregoing computer program product, or the foregoing in-vehicle system.

The "vehicle" in this embodiment of this application may be, but is not limited to, a private vehicle, a commercial vehicle, a bus, a passenger vehicle, a high-speed railway, a subway, an unmanned vehicle, a logistics transport vehicle, an unmanned aerial vehicle, or the like. A power type of the "vehicle" may be fuel driving, pure electric, hydrogen fuel cell driving, hybrid power, or the like. In addition, the "vehicle" herein may be a man-driven vehicle, an autonomous vehicle, an unmanned vehicle, or another type of vehicle. A person skilled in the art may understand that any similar transportation tool may be considered as a "vehicle" in this embodiment of this application.

An embodiment of this application further provides a chassis system. The chassis system may include the serial port switching apparatus 100, either one of the foregoing electronic devices, the foregoing computer-readable storage medium, or the foregoing computing device 600.

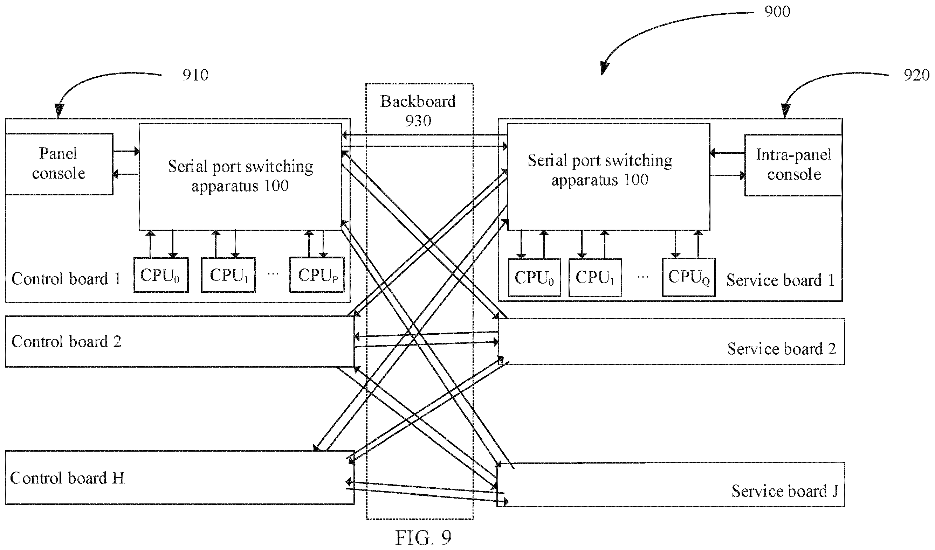

FIG. 9 is an example of a structural diagram of a chassis system 900 according to an embodiment of this application. As shown in FIG. 9, the chassis system 900 may include H control boards 910, J service boards 920, and a backboard 930. The H control boards 910 and the J service boards 920 are interconnected by using the backboard 930.

In some embodiments, to implement a serial port switching function of the chassis system 900, a serial port switching apparatus 100 may be disposed in each control board 910, and the serial port switching apparatus 100 is connected between a panel console port of the control board 910 and serial ports of P CPUs (that is, CPU₀ to CPU_{P}) in the control board 910. In this way, serial port switching between P CPUs (that is, the CPU₀ to the CPU_{P}) inside the control board 910 may be implemented. In addition, because the control board 910 is interconnected with the service boards 920, serial port switching between Q CPUs (that is, a CPU₀ to a CPU_{Q}) in each service board 920 may also be implemented by using the serial port switching apparatus 100 inside the control board 910. Both P and Q may be integers greater than or equal to one.

Specifically, a user operates a toggle hotkey on a debugging device, and the debugging device inputs a character corresponding to the toggle hotkey to the panel console port. In response to the character corresponding to the toggle hotkey, the serial port switching apparatus 100 in the control board 910 performs serial port switching between the P CPUs (that is, the CPU₀ to the CPU_{P}) in the control board 910 and the Q CPUs (that is, the CPU₀ to the CPU_{Q}) in a currently locked service board 920.

Specifically, a user operates a lock/unlock hotkey on a debugging device, and the debugging device inputs a character corresponding to the lock/unlock hotkey to the panel console port. In response to the character corresponding to the lock/unlock hotkey, the serial port switching apparatus 100 in the control board 910 may lock or unlock a serial port of a current CPU, where the current CPU is one of the P CPUs (that is, the CPU₀ to the CPU_{P}) in the control board 910 and the Q CPUs (that is, the CPU₀ to CPU_{Q}) of a currently locked service board 920.

In some embodiments, the service board 920 may be further locked or unlocked by using a lock/unlock hotkey. For example, a user operates the lock/unlock hotkey on a debugging device, and the debugging device inputs a character corresponding to the lock/unlock hotkey to the panel console port. In response to the character corresponding to the lock/unlock hotkey, the serial port switching apparatus 100 in the control board 910 may unlock or lock a current service board 920.

In some embodiments, switching between the service boards 920 may be further implemented by switching a toggle hotkey. A specific switching process is similar to the foregoing serial port switching, and is not repeated herein.

It can be seen from the foregoing that, by using the serial port switching apparatus 100 in the control board 910, operations such as debugging, testing, maintenance, and fault recovery of each control board 910 may be implemented in a production process of the chassis system 900, and operations such as debugging, testing, maintenance, and fault recovery of the control board 910 and the service board 920 in a finished product of the chassis system 900 may also be implemented. Therefore, operations such as debugging, testing, maintenance, and fault recovery can be performed on the entire chassis system 900 by using only one console port (that is, the panel console port), and a panel of the service board 920 does not need to provide a debugging serial port, which not only saves port resources of the panel, improves convenience of maintenance, but also simplifies a board structure.

In some embodiments, a serial port switching apparatus 100 may be disposed in the service board 920 in the chassis system 900. The serial port switching apparatus 100 is connected between an intra-panel console port on the service board 920 and serial ports of Q CPUs (that is, the CPU₀ to the CPU_{Q}) in the service board 920. Therefore, serial port switching between the Q CPUs (that is, the CPU₀ to the CPU_{Q}) in the service board 920 may be implemented by using the serial port switching apparatus 100. In this way, operations such as debugging, testing, maintenance, and fault recovery for a service board 920 may be implemented in a scenario such as a production process or a disassembling and maintenance process of the chassis system 900.

The chassis system 900 provided in this embodiment of this application may be implemented as a switch, a router, an access network, or another similar device. A specific form, a deployment manner, and the like of the chassis system 900 are not limited in this embodiment of this application.

It should be noted that the foregoing are merely example embodiments of this application and used technical principles. A person skilled in the art may understand that this application is not limited to specific embodiments described herein, and a person skilled in the art may make various obvious changes, readjustments, and replacements without departing from the protection scope of this application. Therefore, although this application is described in detail with reference to the foregoing embodiments, this application is not limited to the foregoing embodiments. More other equivalent embodiments may be included without departing from the concept of this application, and all fall within the protection scope of this application.

## Claims

1. A serial port switching apparatus, applied to a computing device, wherein the computing device is provided with an external interface and comprises G processors, the serial port switching apparatus comprises one or more switching logic units, the switching logic unit is connected between the external interface and N processors in the computing device, and the switching logic unit comprises a first multiplexer, a second multiplexer, a third multiplexer, a hotkey detection module, and a control module;
in the first multiplexer, a control end is connected to the control module, a data output end is connected to the external interface, and a first data input end is connected to a data output end of the third multiplexer;
in the second multiplexer, a control end is connected to the control module, a data input end is connected to the external interface, and N data output ends are connected to input serial ports of the N processors in a one-to-one correspondence;
in the third multiplexer, a control end is connected to the control module, the data output end is connected to one data input end of the first multiplexer, and N data input ends are connected to output serial ports of the N processors in a one-to-one correspondence;
the hotkey detection module is configured to perform hotkey detection based on an input character of the external interface, to determine a hotkey type corresponding to the input character;
the control module is configured to perform switching when the hotkey type is a toggle hotkey, wherein the switching comprises: controlling the first multiplexer and the third multiplexer to enable an output serial port of a next processor in the N processors to be connected to the external interface, and controlling the second multiplexer to enable an input serial port of the next processor to be connected to the external interface; and
G is an integer greater than or equal to two, and N is an integer less than or equal to G.

2. The apparatus according to claim 1, wherein the control module is further configured to change a lock status when the hotkey type is a lock/unlock hotkey, wherein the lock status is a locked state or an unlocked state; and in the locked state, the control module does not perform the switching; and in the unlocked state, the control module is capable of performing the switching when the hotkey type is the toggle hotkey.

3. The apparatus according to claim 1 or 2, wherein
the switching logic unit further comprises an idle detection module, configured to perform idle detection on the data output end of the third multiplexer; and
the control module is specifically configured to perform the switching when the hotkey type is the toggle hotkey and an idle detection result of the idle detection module is "idle"; or specifically configured to change the lock status when the hotkey type is the lock/unlock hotkey and an idle detection result of the idle detection module is "idle".

4. The apparatus according to claim 3, wherein the control module is further configured to perform timeout control, and the timeout control comprises one of the following:
before the switching is performed, stopping performing the switching if an idle detection result of the idle detection module is idle detection timeout;
in a process of performing the switching, if an idle detection result of the idle detection module is idle detection timeout, controlling the first multiplexer, the second multiplexer, and the third multiplexer to roll back to a state prior to the switching; or
before the changing the lock status is performed, stopping changing the lock status if an idle detection result of the idle detection module is idle detection timeout.

5. The apparatus according to any one of claims 1 to 4, wherein
the switching logic unit further comprises: a prompt module, which is connected to a second data input end of the first multiplexer, and configured to output, under control of the control module, prompt information corresponding to the hotkey type to the first multiplexer; and
the control module is further configured to control the first multiplexer to select the prompt module, so that the prompt information is sent to an external device through the first multiplexer and the external interface.

6. The apparatus according to claim 5, wherein the control module is specifically configured to:
before the prompt information is output, control the first multiplexer to select the prompt module, and control the third multiplexer to select the output serial port of the next processor; and
after the prompt information is output, control the first multiplexer to select the third multiplexer, and control the second multiplexer to select the input serial port of the next processor, so that both the output serial port and the input serial port of the next processor in the N processors are connected to the external interface.

7. The apparatus according to any one of claims 1 to 6, wherein the serial port switching apparatus further comprises a level shifter, connected between the switching logic unit and the external interface.

8. A serial port switching method, applied to a computing device, wherein the computing device is provided with an external interface and comprises G processors;
the method is implemented by using a serial port switching apparatus, wherein the serial port switching apparatus comprises one or more switching logic units, the switching logic unit is connected between the external interface and serial ports of N processors in the computing device, and the switching logic unit comprises: a first multiplexer, a second multiplexer, and a third multiplexer, wherein a data output end of the first multiplexer is connected to the external interface, a first data input end of the first multiplexer is connected to a data output end of the third multiplexer, a data input end of the second multiplexer is connected to the external interface, and N data output ends of the second multiplexer are connected to input serial ports of the N processors in a one-to-one correspondence, the data output end of the third multiplexer is connected to one data input end of the first multiplexer, and N data input ends of the third multiplexer are connected to output serial ports of the N processors in a one-to-one correspondence; and
the serial port switching method comprises:
performing hotkey detection based on an input character of the external interface, to determine a hotkey type corresponding to the input character; and
performing switching when the hotkey type is a toggle hotkey, wherein the switching comprises: controlling the first multiplexer and the third multiplexer to enable an output serial port of a next processor in the N processors to be connected to the external interface, and controlling the second multiplexer to enable an input serial port of the next processor to be connected to the external interface, wherein
G is an integer greater than or equal to two, and N is an integer less than or equal to G.

9. The method according to claim 8, wherein the method further comprises:
changing a lock status when the hotkey type is a lock/unlock hotkey, wherein the lock status is a locked state or an unlocked state, in the locked state, a control module does not perform the switching, and in the unlocked state, the control module is capable of performing the switching when the hotkey type is the toggle hotkey.

10. The method according to claim 8 or 9, wherein
the method further comprises: performing idle detection on the data output end of the third multiplexer; and
the performing switching when the hotkey type is a toggle hotkey comprises: performing the switching when the hotkey type is the toggle hotkey and a detection result of the idle detection is "idle"; or
the changing a lock status when the hotkey type is a lock/unlock hotkey comprises: changing the lock status when the hotkey type is the lock/unlock hotkey and an idle detection result of the idle detection module is "idle".

11. The method according to claim 10, wherein the method further comprises: performing timeout control, wherein the timeout control comprises one of the following:
before the switching is performed, stopping performing the switching if an idle detection result is idle detection timeout;
in a process of performing the switching, if an idle detection result is idle detection timeout, controlling the first multiplexer, the second multiplexer, and the third multiplexer to roll back to a state prior to the switching; or
before the changing the lock status is performed, stopping changing the lock status if an idle detection result is idle detection timeout.

12. The method according to any one of claims 9 to 11, wherein
the serial port switching apparatus further comprises a prompt module, wherein the prompt module is connected to a second data input end of the first multiplexer; and
the method further comprises: controlling the first multiplexer to select the prompt module, so that prompt information is sent to an external device through the first multiplexer and the external interface.

13. The method according to claim 12, wherein
the controlling the first multiplexer and the third multiplexer to enable an output serial port of a next processor in the N processors to be connected to the external interface comprises: before the prompt information is output, controlling the first multiplexer to select the prompt module, and controlling the third multiplexer to select the output serial port of the next processor; and after the prompt information is output, controlling the first multiplexer to select the third multiplexer, so that the output serial port of the next processor in the N processors is connected to the external interface; and
the controlling the second multiplexer to enable an input serial port of the next processor to be connected to the external interface comprises: after the prompt information is output, controlling the second multiplexer to select the input serial port of the next processor, so that the input serial port of the next processor is connected to the external interface.

14. An electronic device, comprising a processor and an interface circuit, wherein the processor accesses a memory by using the interface circuit, the memory stores program instructions, and when the program instructions are executed by the processor, the processor is enabled to perform the method according to any one of claims 8 to 13.

15. An electronic device, comprising a processor and a memory, wherein the memory stores program instructions, and when the program instructions are executed by the processor, the processor is enabled to perform the method according to any one of claims 8 to 13.

16. The electronic device according to claim 15, wherein the processor is a complex programmable logic device CPLD.

17. A computer-readable storage medium, wherein the computer-readable storage medium stores program instructions, and when the program instructions are executed by a computer, the computer is enabled to perform the method according to any one of claims 8 to 13.

18. A computing device, wherein the computing device comprises a plurality of processors, and the computing device further comprises the serial port switching apparatus according to any one of claims 1 to 7, the electronic device according to any one of claims 14 to 16, or the computer-readable storage medium according to claim 17.

19. A chassis system, comprising the serial port switching apparatus according to any one of claims 1 to 7, the electronic device according to any one of claims 14 to 16, the computer-readable storage medium according to claim 17, or the computing device according to claim 18.

20. An in-vehicle system, comprising the serial port switching apparatus according to any one of claims 1 to 7, the electronic device according to any one of claims 14 to 16, the computer-readable storage medium according to claim 17, or the computing device according to claim 18.

21. A vehicle, comprising the serial port switching apparatus according to any one of claims 1 to 7, the electronic device according to any one of claims 14 to 16, the computer-readable storage medium according to claim 17, the computing device according to claim 18, or the in-vehicle system according to claim 20.
